# EUROPÄISCHE PATENTANMELDUNG

(11) **EP 3 422 641 A1**
(43) Veröffentlichungstag der Anmeldung: **02.01.2019**
(21) Anmeldenummer: 17178996.9
(22) Anmeldetag: 30.06.2017
(51) Int. Cl.: H04L 12/437, H04L 12/26, H04L 29/14, H04L 29/08, H04L 1/00

(54) **VERFAHREN ZUR NACHRICHTENÜBERMITTLUNG IN EINEM REDUNDANT BETREIBBAREN INDUSTRIELLEN KOMMUNIKATIONSNETZ UND KOMMUNIKATIONSGERÄT ZU DESSEN DURCHFÜHRUNG**

(71) Anmelder: Siemens Aktiengesellschaft, 80333 München (DE)
(72) Erfinder: Götz, Franz-Josef, 91180 Heideck (DE); Kießling, Marcel, 91235 Velden (DE); Schmitt, Jürgen, 90766 Fürth (DE)

(57) **Zusammenfassung**

Zur Nachrichtenübermittlung in einem redundant betreibbaren industriellen Kommunikationsnetz, das innerhalb einer Ringtopologie miteinander verbindbare Kommunikationsgeräte umfasst, detektiert eine aktivierte Überwachungs- und Steuerungseinheit eines ausgewählten Kommunikationsgeräts eine Unterbrechung innerhalb einer Ringtopologie anhand durch das ausgewählte Kommunikationsgerät versendeter und wieder empfangener Test-Nachrichten. In Abhängigkeit von einer detektierten Unterbrechung wird eine Weiterleitung von Nachrichten mit Nutzdaten zwischen den Ring-Anschlüssen des ausgewählten Kommunikationsgeräts gesteuert. Für redundante Kommunikationsverbindungen zwischen zwei Kommunikationsgeräten innerhalb einer Ringtopologie werden jeweils zwei disjunkte Pfade ermittelt. Durch die Überwachungs- und Steuerungseinheit des ausgewählten Kommunikationsgeräts wird jeweils genau eine Kommunikationsverbindung zwischen zwei Kommunikationsgeräten über einen der beiden disjunkten Pfade durchgeschaltet.

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

Um Ausfälle von Kommunikationsverbindungen oder -geräten kompensieren zu können, sind Kommunikationsprotokolle, wie High-availability Seamless Redundancy oder Parallel Redundancy Protocol, für hochverfügbare, redundant betreibbare in industriellen Kommunikationsnetze entwickelt worden. High-availability Seamless Redundancy (HSR) und Parallel Redundancy Protocol (PRP) sind im Standard IEC 62439-3 definiert und ermöglichen eine stoßfreie redundante Übertragung von Datenpaketen mit äußerst geringen Erholungszeiten. Entsprechend High-availability Seamless Redundancy und Parallel Redundancy Protocol wird jeder Datenrahmen (Frame) von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Datenrahmen aus einem empfangenen Datenstrom ausgefiltert.

Media Redundancy Protocol (MRP) ist im Standard IEC 62439-2 definiert und ermöglicht eine Kompensation einzelner Verbindungsausfälle in Netzwerken mit einfacher Ringtopologie bei stoßbehafteter redundanter Übertragung von Datenrahmen. Entsprechend Media Redundancy Protocol ist einem Switch mit zwei Ports innerhalb der Ringtopologie ein Redundanz-Manager zugeordnet, der das Netzwerk auf Verbindungsausfälle überwacht und ggf. eine Schaltmaßnahme für einen Ringschluss einleitet. In normalem Betriebszustand prüft der Redundanz-Manager anhand von Test-Datenrahmen, ob innerhalb der Ringtopologie eine Unterbrechung aufgetreten ist. Datenrahmen mit Nutzdaten leitet der dem Redundanz-Manager zugeordnet Switch normalerweise jedoch nicht von einem Port an den anderen Port weiter. Somit wird verhindert, dass Datenrahmen mit Nutzdaten permanent innerhalb der Ringtopologie zirkulieren. Fällt innerhalb der Ringtopologie ein Switch oder eine Verbindung aus, werden von einem Port ausgesendeten Test-Datenrahmen nicht mehr am jeweils anderen Port empfangen. Anhand dessen kann der Redundanz-Manager einen Ausfall erkennen und leitet bei einem Ausfall Datenrahmen mit Nutzdaten im Unterschied zum normalen Betriebszustand von einem Port an den anderen Port und umgekehrt weiter. Darüber hinaus veranlasst der Redundanz-Manager eine Benachrichtigung der übrigen Switches über eine Ausfallbedingte Topologieänderung. Auf diese Weise wird vermieden, dass Datenrahmen über die ausgefallene Verbindung übermittelt werden.

In EP 1 062 787 B1 ist ein lokales Netzwerk mit Redundanzeigenschaften beschrieben, dessen Topologie linienförmig ist. Die beiden Linienenden sind an einen Redundanzmanager angeschlossen, der die beiden Linienenden im fehlerfreien Fall voneinander trennt, während die beiden Linienenden im Fehlerfall miteinander verbunden werden. Der Redundanzmanager speist in vorgegebenen Zeitintervallen Testtelegramme in die beiden Linienenden ein und leitet aus dem Empfang an dem jeweils anderen Linienende innerhalb eines vorgegebenen Zeitintervalls einen Befehl für eine Trennung der beiden Linienenden ab. Wenn innerhalb eines vorgegebenen Zeitintervalls kein Testtelegramm empfangen wurde, leitet der Redundanzmanager einen Befehl für eine Verbindung der beiden Linienenden ab.

Aus EP 2 127 329 A1 ist ein Verfahren zur Filterung redundanter Datenrahmen in einem Netzknoten mit zumindest zwei Ports beschrieben, die jeweils eine Sende- und eine Empfangseinrichtung umfassen. Die Datenrahmen weisen jeweils zumindest eine MAC-Quelladresse, eine Datenrahmen-ID sowie einen CRC-Wert auf. Die Sendeeinrichtungen weisen jeweils eine Sendeliste auf, in der zu sendende Datenrahmen gespeichert werden. Die Empfangseinrichtungen weisen jeweils einen Empfangsspeicher zum Speichern von empfangenen Datenrahmen auf. Zur Filterung von redundanten Datenrahmen in einem Netzknoten eines Kommunikationsnetzes wird vorgeschlagen, dass bei Empfang eines ersten Datenrahmens an einem der Ports unter Verwendung der im ersten Datenrahmen angegebenen MAC-Quelladresse und der Datenrahmen-ID des ersten Datenrahmens in der Sendeliste nach einem zweiten Datenrahmen mit identischer MAC-Quelladresse und Datenrahmen-ID gesucht wird. Falls ein solcher zweiter Datenrahmen vorhanden ist, wird der ersten Datenrahmen verworfen.

Ein Kommunikationsgerät für ein redundant betreibbares industrielles Kommunikationsnetz umfasst entsprechend EP 2 661 023 B1 eine erste und zweite Sende- und Empfangseinheit, die Datenpakete innerhalb des industriellen Kommunikationsnetzes wahlweise stoßbehaftet oder stoßfrei übermitteln und selektiv in einen stoßbehafteten oder stoßfreien Übermittlungsmodus umschaltbar sind. Mit der ersten bzw. zweiten Sende- und Empfangseinheit ist eine Auswerteeinheit verbunden, die stoßbehaftet oder stoßfrei innerhalb des industriellen Kommunikationsnetzes zu übermittelnde Datenpakete detektiert. Bei Detektion eines stoßbehaftet zu übermittelnden Datenpakets werden eine Redundanzbehandlungseinheit und eine Filtereinheit für empfangene redundante Datenpakete deaktiviert. Der ersten bzw. zweiten Sende- und Empfangseinheit ist eine Speichereinheit zugeordnet, die im stoßbehafteten Übermittlungsmodus zumindest ein stoßbehaftet zu übermittelndes Datenpaket während einer vorgegebenen Zeitdauer puffert.

EP 2 713 563 A1 betrifft ein redundant betreibbares industrielles Kommunikationssystem mit einer Mehrzahl von innerhalb einer Ring- oder Baumtopologie redundant an ein industrielles Kommunikationsnetz angebundenen Kommunikationsgeräten. Außerdem ist eine Mehrzahl von innerhalb einer Linientopologie miteinander verbundenen Kommunikationsgeräten vorgesehen, von denen ein erstes und ein zweites Kommunikationsgerät innerhalb der Ring- oder Baumtopologie an das industrielle Kommunikationsnetz angebunden sind. Ein als Teilring-Redundanz-Manager innerhalb der Linientopologie eingerichtetes Kommunikationsgerät umfasst eine Überwachungs- und Steuerungseinheit, die eine Unterbrechung innerhalb der Linientopologie anhand versendeter Test-Nachrichten detektiert und eine Weiterleitung von Nachrichten mit Nutzdaten zwischen zwei der Linientopologie zugeordneten Anschlüssen des als Teilring-Redundanz-Manager eingerichteten Kommunikationsgeräts bei einer detektierten Unterbrechung steuert. Das erste bzw. das zweite Kommunikationsgerät senden innerhalb der Linientopologie empfangene Test-Nachrichten an das als Teilring-Redundanz-Manager eingerichtete Kommunikationsgerät zurück oder senden Test-Nachrichten an das als Teilring-Redundanz-Manager eingerichtete Kommunikationsgerät.

In Ethernet-basierten Kommunikationsnetzen werden Telegramme an unbekannte Teilnehmer grundsätzlich über alle Ports eines Switches weitergeleitet. Absenderadressen von Telegrammen werden in Source Address Tables gespeichert, anhand derer später ein Port-selektives Switching erfolgt. Auf diese Weise wird ein Weiterleiten von Telegrammen auf einen anhand der jeweiligen Absenderadresse gelernten Weg begrenzt. Hierdurch ist in Kommunikationsnetzen mit Ringtopologie eine Reduzierung benötigter Bandbreite möglich, da eine Weiterleitung von Telegrammen in beide Ringrichtungen entfällt. Wird MRP als Ringredundanz-Protokoll verwendet, müssen die Source Address Tables bei Topologieänderungen bzw. durch einen Redundanz-Manager gesteuerten Umschaltvorgängen gelöscht und anschließend neu befüllt werden. Noch nicht vollständig übermittelte, in einem Ring-Netzknoten zwischengespeicherte Telegramme können eine Neu-Befüllung der Source Address Tables stören, wenn die jeweilige Absenderadresse nach einer Topologieänderung über den zuvor gelernten Weg nicht mehr erreichbar ist. Aufgrund dessen sollten alle zwischengespeicherten Telegramme gelöscht werden. Dies ist jedoch mit Telegramm-Verlusten verbunden. Bei Verwendung von HSR als Ringredundanz-Protokoll oder einer Realisierung eines Ringredundanz-Protokolls auf Basis von gerouteten Pfaden ist nachteilig, dass in jedem Ring-Netzknoten eine aufwendige Duplikatefilterung zu realisieren ist.

Der vorliegenden Erfindung liegt die Aufgabe zugrunde, ein Verfahren zu schaffen, das eine effiziente Realisierung einer redundanten Nachrichtenübermittlung in einem Kommunikationsnetz mit Ringtopologie und geringe Rekonfigurationszeiten bei Topologieänderungen ermöglicht, und ein Kommunikationsgerät zu dessen Durchführung anzugeben.

Diese Aufgabe wird erfindungsgemäß durch ein Verfahren mit den in Anspruch 1 angegebenen Merkmalen und durch ein Kommunikationsgerät mit den in Anspruch 9 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Nachrichtenübermittlung in einem redundant betreibbaren industriellen Kommunikationsnetz umfasst das Kommunikationsnetz innerhalb einer Ringtopologie miteinander verbindbare Kommunikationsgeräte, die jeweils zumindest ein Koppelelement sowie einen ersten und einen zweiten Ring-Anschluss aufweisen, die durch das Koppelelement schaltbar miteinander verbindbar sind. Ein ausgewähltes Kommunikationsgerät, das beispielsweise als Ringredundanz-Manager betrieben wird, umfasst eine aktivierte Überwachungs- und Steuerungseinheit. Diese Überwachungs- und Steuerungseinheit detektiert eine Unterbrechung innerhalb einer Ringtopologie anhand durch das ausgewählte Kommunikationsgerät versendeter und wieder empfangener Test-Nachrichten. Eine ausbleibende Test-Nachricht indiziert vorzugsweise eine Unterbrechung innerhalb der Ringtopologie. Darüber hinaus steuert die Überwachungs- und Steuerungseinheit eine Weiterleitung von Nachrichten mit Nutzdaten zwischen den Ring-Anschlüssen des ausgewählten Kommunikationsgeräts in Abhängigkeit von einer detektierten Unterbrechung. Vorteilhafterweise wird durch die Überwachungs- und Steuerungseinheit des ausgewählten Kommunikationsgeräts bei einer Unterbrechung innerhalb der Ringtopologie eine Weiterleitung von Nachrichten mit Nutzdaten zwischen den Ring-Anschlüssen des ausgewählten Kommunikationsgeräts aktiviert.

Erfindungsgemäß werden für redundante Kommunikationsverbindungen zwischen zwei Kommunikationsgeräten innerhalb einer Ringtopologie jeweils zwei disjunkte Pfade ermittelt. Entsprechend zu den ermittelten Pfaden korrespondierenden Weiterleitungsregeln werden Nachrichten über die Ring-Anschlüsse der Kommunikationsgeräte weitergeleitet. Die beiden disjunkten Pfade zwischen zwei Kommunikationsgeräten innerhalb der Ringtopologie erstrecken sich insbesondere jeweils über entgegengesetzte Ringrichtungen. Das Kommunikationsnetz kann beispielsweise eine vermaschte Topologie aufweisen, wobei die Kommunikationsgeräte über die ermittelten disjunkten Pfade innerhalb der Ringtopologie logisch miteinander verbunden sind. Durch die Überwachungs- und Steuerungseinheit des ausgewählten Kommunikationsgeräts wird jeweils genau eine Kommunikationsverbindung zwischen zwei Kommunikationsgeräten über einen der beiden disjunkten Pfade durchgeschaltet. Aufgrund der ermittelten disjunkten Pfade ist bei einer Unterbrechung innerhalb der Ringtopologie und einem anschließenden Steuerungseingriff durch einen Ringredundanz-Manager kein Löschen und Neu-Befüllen von Source Address Tables sowie ein Löschen noch nicht vollständig übermittelter, zwischengespeicherte Nachrichten erforderlich. Zudem ist anstelle von Duplikatefiltern in jedem Ring-Netzknoten pro Ring lediglich ein ausgewähltes Kommunikationsgerät mit einer o.g. Überwachungs- und Steuerungseinheit erforderlich.

Entsprechend einer vorteilhaften Weiterbildung der vorliegenden Erfindung umfassen mehrere ausgewählte Kommunikationsgeräte jeweils eine aktivierbare Überwachungs- und Steuerungseinheit. Dabei ermitteln die ausgewählten Kommunikationsgeräte untereinander das ausgewählte Kommunikationsgerät mit aktivierter Überwachungs- und Steuerungseinheit automatisch anhand eines Vergleichs von den ausgewählten Kommunikationsgeräten zugeordneten Geräteidentifikatoren bzw. Prioritäten.

Darüber hinaus sind die innerhalb der Ringtopologie miteinander verbundenen Kommunikationsgeräte vorzugsweise für einen selbständigen Zustandsübergang eines nach einer Unterbrechung blockierten Anschlusses in einen Nutzdaten weiterleitenden Zustand eingerichtet, und zwar unabhängig von einem Eingriff eines als Ringredundanz-Manager eingerichteten ausgewählten Kommunikationsgeräts. Dies ermöglicht eine Entlastung des als Ringredundanz-Manager eingerichteten ausgewählten Kommunikationsgeräts und eine vereinfachte, schnellere Rekonfiguration beispielsweise nach Netzfehlern.

Entsprechend einer bevorzugten Ausgestaltung des erfindungsgemäßen Verfahrens werden die disjunkten Pfade mittels Dijkstra-Algorithmus, Bellman-Ford-Algorithmus oder Floyd-Warshall-Algorithmus ermittelt. Die disjunkten Pfade können beispielsweise durch die aktivierte Überwachungs- und Steuerungseinheit, durch eine zentrale Instanz innerhalb des industriellen Kommunikationsnetzes oder durch die jeweiligen Kommunikationsgeräte innerhalb der Ringtopologie ermittelt werden.

Das erfindungsgemäße Kommunikationsgerät ist zur Durchführung eines Verfahrens entsprechend vorangehenden Ausführungen vorgesehen und umfasst zumindest einen ersten und einen zweiten Anschluss zur Verbindung mit weiteren Kommunikationsgeräten innerhalb einer Ringtopologie. Außerdem weist das Kommunikationsgerät ein Koppelelement auf, durch das der erste und der zweite Anschluss schaltbar miteinander verbindbar sind. Eine aktivierbare Überwachungs- und Steuerungseinheit des Kommunikationsgeräts ist dafür ausgestaltet und eingerichtet, eine Unterbrechung innerhalb einer Ringtopologie anhand versendeter und wieder empfangener Test-Nachrichten zu detektieren sowie eine Weiterleitung von Nachrichten mit Nutzdaten zwischen dem ersten und dem zweiten Anschluss in Abhängigkeit von einer detektierten Unterbrechung zu steuern.

Erfindungsgemäß ist das Kommunikationsgerät dafür ausgestaltet und eingerichtet, Nachrichten entsprechend Weiterleitungsregeln, die zu disjunkten Pfaden zwischen jeweils zwei Kommunikationsgeräten innerhalb einer Ringtopologie korrespondieren, über den ersten und den zweiten Anschluss weiterzuleiten. Dabei sind die disjunkten Pfade für redundante Kommunikationsverbindungen zwischen zwei Kommunikationsgeräten innerhalb der Ringtopologie vorgesehen. Außerdem ist die Überwachungs- und Steuerungseinheit dafür ausgestaltet und eingerichtet, jeweils genau eine Kommunikationsverbindung zwischen zwei Kommunikationsgeräten über einen der beiden disjunkten Pfade durchzuschalten. Darüber hinaus kann das Kommunikationsgerät dafür ausgestaltet und eingerichtet sein, für redundante Kommunikationsverbindungen zwischen zwei Kommunikationsgeräten innerhalb der Ringtopologie jeweils zwei disjunkte Pfade zu ermitteln.

Die vorliegende Erfindung wird nachfolgend an einem Ausführungsbeispiel anhand der Zeichnung näher erläutert. Es zeigt
- Figur 1: eine schematische Darstellung eines redundant betreibbaren industriellen Kommunikationsnetzes mit mehreren innerhalb einer Ringtopologie miteinander verbundene Kommunikationsgeräten vor einem Ausfall eines Ring-Netzknotens,

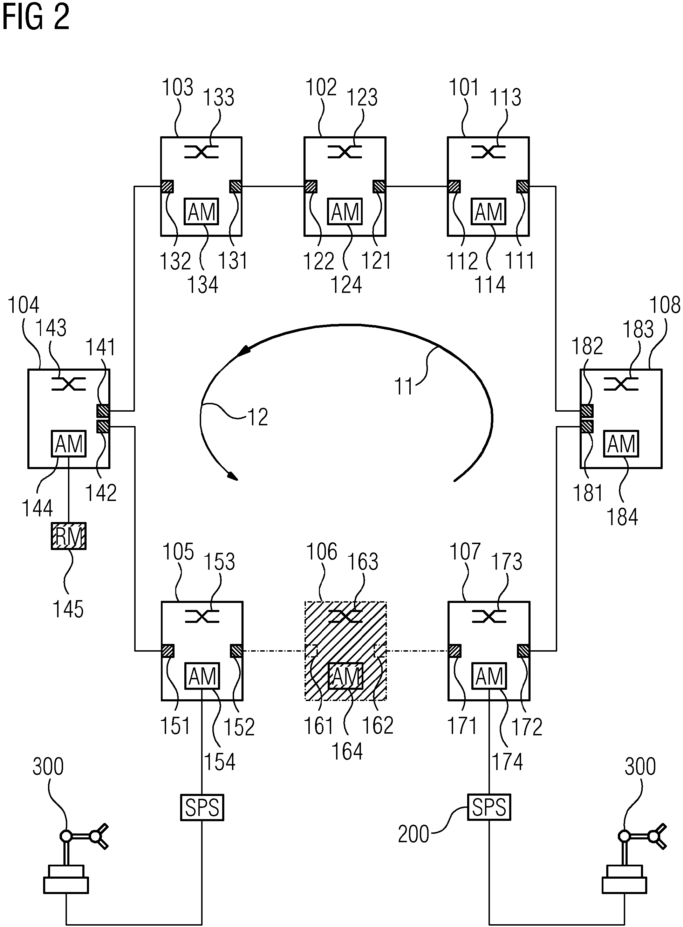

- Figur 2: das Kommunikationsnetz entsprechend Figur 1 nach Ausfall eines Ring-Netzknotens.

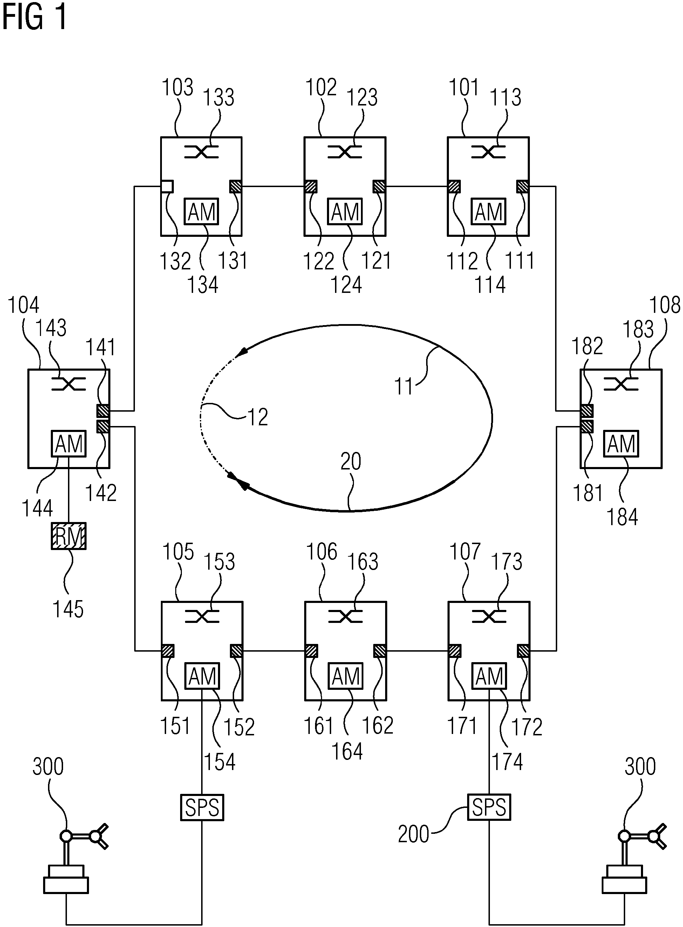

Das in Figur 1 dargestellte Kommunikationsnetz umfasst mehrere Switches 101-108, die innerhalb einer Ringtopologie miteinander verbindbar sind. Grundsätzlich kann das Kommunikationsnetz eine vermaschte Topologie aufweisen. In diesem Fall sind die Switches 101-108 über ermittelte disjunkte Pfade innerhalb der Ringtopologie logisch miteinander verbunden. An die Switches 105 und 107 sind vorliegenden Ausführungsbeispiel jeweils eine speicherprogrammierbaren Steuerung 200 eines industriellen Automatisierungssystems angeschlossen.

Speicherprogrammierbare Steuerungen 200 umfassen typischerweise jeweils ein Kommunikationsmodul, eine Zentraleinheit sowie zumindest eine Eingabe/Ausgabe-Einheit (I/O-Modul). Über das Kommunikationsmodul ist die jeweilige speicherprogrammierbare Steuerung 200 beispielsweise zusätzlich mit einem Feldbus verbunden. Die Eingabe/Ausgabe-Einheit dient einem Austausch von Steuerungs- und Messgrößen zwischen der speicherprogrammierbaren Steuerung 200 und einer durch die speicherprogrammierbare Steuerung 200 gesteuerten Maschine oder Vorrichtung 300, insbesondere über den Feldbus. Eingabe/Ausgabe-Einheiten können grundsätzlich auch als dezentrale Peripheriemodule ausgestaltet sein, die entfernt von einer speicherprogrammierbaren Steuerung angeordnet sind. Die Zentraleinheit ist insbesondere für eine Ermittlung geeigneter Steuerungsgrößen aus erfassten Messgrößen vorgesehen. Obige Komponenten der speicherprogrammierbaren Steuerungen 200 sind im vorliegenden Ausführungsbeispiel über ein Rückwandbus-System miteinander verbunden.

Die Switches 101-108 umfassen im vorliegenden Ausführungsbeispiel jeweils einen ersten Ring-Anschluss 111, 121, 131, 141, 151, 161, 171, 181, einen zweiten Ring-Anschluss 112, 122, 132, 142, 152, 162, 172, 182 sowie ein als Backplane-Switch ausgestaltetes Koppelelement 113, 123, 133, 143, 153, 163, 173, 183. Dabei sind der jeweilige erste und zweite Ring-Anschluss über das Koppelelement des jeweiligen Switches 101-108 schaltbar miteinander verbindbar.

Von den Switches 101-108 weist ein ausgewählter Switch 104 einen aktivierten Ringredundanz-Manager 145 auf, der durch eine Steuerungs- und Überwachungseinheit gebildet ist. Der Ringredundanz-Manager 145 detektiert eine Unterbrechung innerhalb der Ringtopologie anhand versendeter Test-Nachrichten und steuert eine Weiterleitung von Nachrichten mit Nutzdaten zwischen dem ersten und zweiten Ring-Anschluss 141-142 des ausgewählten Switches 104 in Abhängigkeit von einer detektierten Unterbrechung. Dabei indiziert eine ausbleibende Test-Nachricht eine Unterbrechung innerhalb der Ringtopologie. In diesem Fall wird durch den Ringredundanz-Manager 145 eine Weiterleitung von Nachrichten mit Nutzdaten zwischen den Ring-Anschlüssen 141, 142 des ausgewählten Switches 104 aktiviert.

In einem ungestörten Betriebszustand befindet sich einer der beiden Ring-Anschlüsse 141, 142 des ausgewählten Switches 104 bezüglich einer Weiterleitung von Nachrichten mit Nutzdaten in einem blockierten Zustand, so dass vorzugsweise lediglich Test-Nachrichten weitergeleitet werden. Bei einer detektierten Unterbrechung innerhalb der Ringtopologie veranlasst der Ringredundanz-Manager 145 einen Übergang des zuvor blockierten Ring-Anschlusses 141 bzw. 142 in einen Nachrichten mit Nutzdaten weiterleitenden Zustand.

Grundsätzlich können alle Switches 101-108 innerhalb der Ringtopologie einen aktivierbaren Ringredundanz-Manager umfassen. In diesem Fall ermitteln die Switches 101-108 untereinander den ausgewählten Switch mit aktiviertem Ringredundanz-Manager. Dies kann beispielsweise automatisch anhand eines Vergleichs von den Switches zugeordneten Geräteidentifikatoren bzw. Prioritäten erfolgen. Im vorliegenden Ausführungsbeispiel umfassen die Switches 101-108 jeweils eine Auto-Manager-Funktionseinheit 114, 124, 134, 144, 154, 164, 174, 184 zur Auswahl des Switches mit aktiviertem Ringredundanz-Manager.

Für redundante Kommunikationsverbindungen zwischen zwei Switches innerhalb der Ringtopologie werden jeweils zwei disjunkte Pfade ermittelt. Beispielsweise wird für redundante Kommunikationsverbindungen vom Switch 107 zum Switch 105 ein erster Pfad ermittelt, der sich entgegen Uhrzeigerrichtung über die Switches 108, 101, 102, 103, 104 erstreckt und zwei Teilpfade 11, 12 umfasst. Dagegen erstreckt sich ein zweiter Pfad 20 in Uhrzeigerrichtung über den Switch 106. Die disjunkten Pfade können wahlweise durch den aktivierten Ringredundanz-Manager, durch eine zentrale Instanz innerhalb des industriellen Kommunikationsnetzes oder durch die jeweiligen Switches innerhalb der Ringtopologie ermittelt werden.

Nachrichten mit Nutzdaten werden entsprechend zu den ermittelten Pfaden korrespondierenden Weiterleitungsregeln über die Ring-Anschlüsse der Switches 101-108 weitergeleitet. Im ungestörten Betriebszustand unterbricht der Ringredundanz-Manager 145 des ausgewählten Switches 104 im vorliegenden Ausführungsbeispiel jedoch den ersten Pfad vom Switch 107 zum Switch 105, so dass eine Weiterleitung von Nachrichten mit Nutzdaten nur über einen ersten Teilpfad 11 erfolgt, der die Switches 108, 101, 102 umfasst. Über einen zweiten Teilpfad 12, der den Switch 104 umfasst, erfolgt in diesem Fall dagegen keine Weiterleitung von Nachrichten mit Nutzdaten. Im ungestörten Betriebszustand wird also nur der zweite Pfad 20 vom Switch 107 zum Switch 105 durchgeschaltet.

Tritt beispielsweise durch einen Ausfall des Switches 106 eine Topologieänderung auf, wird dies durch den Ringredundanz-Manager 145 des ausgewählten Switches 104 detektiert. Daraufhin werden der erste Ring-Anschluss 141 und der zweite Ring-Anschluss 142 des ausgewählten Switches 104 für eine Weiterleitung von Nachrichten mit Nutzdaten miteinander verbunden, so dass der erste Pfad mit den beiden Teilpfaden 11, 12 durchgeschaltet wird. Auch nach Ausfall des zweiten Pfades 20 ist somit genau ein Pfad vom Switch 107 zum Switch 105 durchgeschaltet. Allgemein wird durch den Ringredundanz-Manager 145 des ausgewählten Switches 104 grundsätzlich jeweils genau eine Kommunikationsverbindung zwischen zwei Switches über einen von zwei disjunkten Pfade durchgeschaltet.

## Patentansprüche

1. Verfahren zur Nachrichtenübermittlung in einem redundant betreibbaren industriellen Kommunikationsnetz, bei dem
- das Kommunikationsnetz innerhalb einer Ringtopologie miteinander verbindbare Kommunikationsgeräte (101-108) umfasst, die jeweils zumindest ein Koppelelement (113, 123, 133, 143, 153, 163, 173, 183) sowie einen ersten (111, 121, 131, 141, 151, 161, 171, 181) und einen zweiten Ring-Anschluss (112, 122, 132, 142, 152, 162, 172, 182) aufweisen, die durch das Koppelelement schaltbar miteinander verbindbar sind,
- ein ausgewähltes Kommunikationsgerät (104) eine aktivierte Überwachungs- und Steuerungseinheit (145) umfasst, die eine Unterbrechung innerhalb einer Ringtopologie anhand durch das ausgewählte Kommunikationsgerät versendeter und wieder empfangener Test-Nachrichten detektiert sowie eine Weiterleitung von Nachrichten mit Nutzdaten zwischen den Ring-Anschlüssen des ausgewählten Kommunikationsgeräts in Abhängigkeit von einer detektierten Unterbrechung steuert,
**dadurch gekennzeichnet, dass**
- für redundante Kommunikationsverbindungen zwischen zwei Kommunikationsgeräten (107, 105) innerhalb einer Ringtopologie jeweils zwei disjunkte Pfade (11-12, 20) ermittelt werden,
- Nachrichten entsprechend zu den ermittelten Pfaden korrespondierenden Weiterleitungsregeln über die Ring-Anschlüsse der Kommunikationsgeräte weitergeleitet werden,
- durch die Überwachungs- und Steuerungseinheit (145) des ausgewählten Kommunikationsgeräts (104) jeweils genau eine Kommunikationsverbindung zwischen zwei Kommunikationsgeräten über einen der beiden disjunkten Pfade durchgeschaltet wird.

2. Verfahren nach Anspruch 1,
bei dem eine ausbleibende Test-Nachricht eine Unterbrechung innerhalb der Ringtopologie indiziert.

3. Verfahren nach Anspruch 2,
bei dem durch die Überwachungs- und Steuerungseinheit des ausgewählten Kommunikationsgeräts bei einer Unterbrechung innerhalb der Ringtopologie eine Weiterleitung von Nachrichten mit Nutzdaten zwischen den Ring-Anschlüssen des ausgewählten Kommunikationsgeräts aktiviert wird.

4. Verfahren nach einem der Ansprüche 1 bis 3,
bei dem mehrere ausgewählte Kommunikationsgeräte jeweils eine aktivierbare Überwachungs- und Steuerungseinheit umfassen und bei dem die ausgewählten Kommunikationsgeräte untereinander das ausgewählte Kommunikationsgerät mit aktivierter Überwachungs- und Steuerungseinheit automatisch anhand eines Vergleichs von den ausgewählten Kommunikationsgeräten zugeordneten Geräteidentifikatoren und/oder Prioritäten ermitteln.

5. Verfahren nach einem der Ansprüche 1 bis 4,
bei dem sich die beiden disjunkten Pfade zwischen zwei Kommunikationsgeräten innerhalb der Ringtopologie jeweils über entgegengesetzte Ringrichtungen erstrecken.

6. Verfahren nach einem der Ansprüche 1 bis 5,
bei dem die disjunkten Pfade durch die aktivierte Überwachungs- und Steuerungseinheit ermittelt werden.

7. Verfahren nach einem der Ansprüche 1 bis 5,
bei dem die disjunkten Pfade durch eine zentrale Instanz innerhalb des industriellen Kommunikationsnetzes ermittelt werden.

8. Verfahren nach einem der Ansprüche 1 bis 5,
bei dem die disjunkten Pfade durch die jeweiligen Kommunikationsgeräte innerhalb der Ringtopologie ermittelt werden.

9. Verfahren nach einem der Ansprüche 1 bis 8,
bei dem das Kommunikationsnetz eine vermaschte Topologie aufweist und die Kommunikationsgeräte über die ermittelten disjunkten Pfade innerhalb der Ringtopologie logisch miteinander verbunden sind.

10. Kommunikationsgerät zur Durchführung eines Verfahrens nach einem der Ansprüche 1 bis 9 mit
- zumindest einem ersten und einem zweiten Anschluss zur Verbindung mit weiteren Kommunikationsgeräten innerhalb einer Ringtopologie,
- einem Koppelelement, durch das der erste und der zweite Anschluss schaltbar miteinander verbindbar sind,
- einer aktivierbaren Überwachungs- und Steuerungseinheit, die dafür ausgestaltet und eingerichtet ist, eine Unterbrechung innerhalb einer Ringtopologie anhand versendeter und wieder empfangener Test-Nachrichten zu detektieren sowie eine Weiterleitung von Nachrichten mit Nutzdaten zwischen dem ersten und dem zweiten Anschluss in Abhängigkeit von einer detektierten Unterbrechung zu steuern,
**dadurch gekennzeichnet, dass**
- das Kommunikationsgerät dafür ausgestaltet und eingerichtet ist, Nachrichten entsprechend Weiterleitungsregeln, die zu disjunkten Pfaden zwischen jeweils zwei Kommunikationsgeräten innerhalb einer Ringtopologie korrespondieren, über den ersten und den zweiten Anschluss weiterzuleiten, wobei die disjunkten Pfade für redundante Kommunikationsverbindungen zwischen zwei Kommunikationsgeräten innerhalb der Ringtopologie vorgesehen sind,
- die Überwachungs- und Steuerungseinheit dafür ausgestaltet und eingerichtet ist, jeweils genau eine Kommunikationsverbindung zwischen zwei Kommunikationsgeräten über einen der beiden disjunkten Pfade durchzuschalten.

11. Kommunikationsgerät nach Anspruch 10,
bei dem das Kommunikationsgerät dafür ausgestaltet und eingerichtet ist, für redundante Kommunikationsverbindungen zwischen zwei Kommunikationsgeräten innerhalb der Ringtopologie jeweils zwei disjunkte Pfade zu ermitteln.
